# EUROPEAN PATENT SPECIFICATION

(11) **EP 3 342 791 B1**
(45) Date of publication and mention of the grant of the patent: **01.05.2024**
(21) Application number: 17180892.6
(22) Date of filing: 12.07.2017
(51) Int. Cl.: C08F 210/06, H01B 3/44

(54) **POLYPROPYLENE RESIN FOR POWER CABLE AND POWER CABLE COMPRISING THE SAME IN INSULATION LAYER**
POLYPROPYLENHARZ FÜR EIN STROMKABEL UND STROMKABEL ENTHALTEND DAS HARZ IN DER ISOLATIONSSCHICHT
RÉSINE DE POLYPROPYLÈNE POUR CÂBLE ÉLECTRIQUE ET CÂBLE ÉLECTRIQUE COMPRENANT LE MÊME DANS UNE COUCHE D'ISOLATION

(30) Priority: 27.12.2016 KR 20160180196
(43) Date of publication of application: 04.07.2018
(73) Proprietor: Hanwha TotalEnergies Petrochemical Co., Ltd., Seosan-si, Chungcheongnam-do 31900 (KR)
(72) Inventor: KIM, Bong Seock, 31900 Chungcheongnam-do (KR); CHUN, Yong Sung, 31900 Chungcheongnam-do (KR)
(74) Representative: Schwarz & Partner Patentanwälte GmbH

(56) References cited:
- EP-A1- 2 316 882
- EP-A1- 2 341 088
- EP-A1- 2 415 791
- WO-A1-2017/198633

## Description

### CROSS-REFERENCE TO RELATED APPLICATION

This application claims priority to and the benefit of Korean Patent Application No. 10-2016-0180196 filed on December 27, 2016 in the Korean Intellectual Property Office.

### BACKGROUND

### 1. Field

The present invention relates to a polypropylene resin suitable for a power cable and a power cable comprising the polypropylene resin in an insulation layer. More particularly, the present invention relates to non-crosslinked polypropylene having an excellent mechanical characteristic and a recycling property to exhibit superior electrical properties, which are offered to the power cable including an insulating layer.

### 2. Description of the Related Art

In an insulating layer of a general cable, polyethylene or ethylene-propylene rubber (EPR) copolymer, or ethylene-propylene-dien modified (EPDM) rubber copolymer is crosslinked and used so as to maintain mechanical, electrical properties at a high temperature of 90 to 110°C, which is an operating temperature of a high-voltage cable.

However, an inferior product or a product that is almost used up, which is made from a crosslinked polymer, such as crosslinked polyethylene (XLPE), is not recyclable and has no option but to be incinerated, which is not eco-friendly. Non-crosslinked high density polyethylene (HDPE), linear low density polyethylene (LLDPE) or low density polyethylene (LDPE) is recyclable but is poor in heat resistance, so that it may be modified at high temperatures to then be melted. Therefore, even a non- crosslinked polymer cannot be used for a high-voltage cable operating at high temperatures.

Korean patent publication No. 10-2014-0053204 describes a power cable using a polypropylene resin with an organic nucleating agent added thereto in an insulating layer. However, the polypropylene resin has poor electrical properties. Accordingly, it is necessary to develop a polypropylene resin that is recyclable and eco-friendly while exhibiting superior electrical properties. WO 2017/198633 A1 (BOREALIS AG [AT]) is state of the art under Art. 54(3) EPC and discloses the preparation of a propylene copolymer with an amount of ethylene of more than 2 w.t. % . EP 2 415 791 A1, EP 2 341 088 A1 and EP 2 316 882 A1 disclose the preparation of a polypropylene resin in the presence of a zirconocene based catalyst system.

### SUMMARY

To solve the problems, the present invention provides a polypropylene resin which is eco-friendly while exhibiting superb electrical properties when it is used for a power cable.

The present invention also provides a power cable that is recyclable while exhibiting superb electrical properties.

The above and other aspects of the present invention will be described in or be apparent from the following description of exemplary embodiments.

According to an aspect of the present invention, there is provided a polypropylene resin for a power cable, wherein a melting temperature (Tm) of the polypropylene resin is 150°C or higher, a difference (Tm-Tc) between the melting temperature (Tm) and a crystallization temperature (Tc) is 45°C or less and the polypropylene resin is a non-crosslinked resin.

As described above, the polypropylene resin according to the present invention is a non-crosslinked and eco-friendly resin and has superb electrical properties when it is used in an insulating layer of a power cable, thereby providing a power cable having an improved breakdown characteristic.

### BRIEF DESCRIPTION OF DRAWINGS

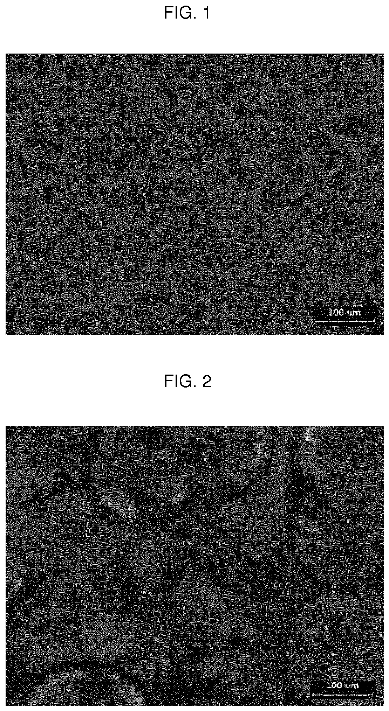

FIG. 1 illustrates an optical microscope image showing shapes and sizes of crystals of a polypropylene resin prepared by isothermal crystallization in Example 2, in which the crystal sizes are very small (i.e., less than 100 µm); and
FIG. 2 illustrates an optical microscope image showing shapes and sizes of crystals of a polypropylene resin prepared by isothermal crystallization in Comparative Example 2, in which the crystal sizes are relatively large (i.e., greater than 100 µm)

### DETAILED DESCRIPTION

Hereinafter, the present invention will be described in detail.

The present invention provides a polypropylene resin for a power cable, wherein a melting temperature (Tm) of the polypropylene resin is 150 °C or higher, a difference (Tm-Tc) between the melting temperature (Tm) and a crystallization temperature (Tc) is 45°C or less and the polypropylene resin is a non-crosslinked resin, wherein the polypropylene resin comprises 10 to 45 ppm of metallic catalyst residue, as measured by X-ray fluorescence (XRF), wherein the metallic catalyst residue comprises Mg, Ti, Al and Si, wherein the polypropylene is a propylene homopolymer or a random copolymer of propylene and one or more alpha-olefins other than propylene, wherein the amount of alpha-olefin is less than 2 wt%, and wherein the polypropylene is prepared by using a catalyst composition comprising a dialkoxy magnesium carrier.

The polypropylene resin according to the present invention is a non-crosslinked resin and has a melting temperature (Tm) of 150°C or higher, preferably in the range of 150°C to 165°C. If the melting temperature (Tm) is lower than 150°C, the heat resistance of the polypropylene resin is not sufficiently high, so that the polypropylene resin is not suitably used for a high-voltage power cable operating at high temperature.

In addition, a difference (Tm-Tc) between the melting temperature (Tm) and a crystallization temperature (Tc) is preferably 45°C or less. If the difference (Tm-Tc) between the melting temperature (Tm) and the crystallization temperature (Tc) is greater than 45°C, when a molten resin is cooled and crystallized for product formation, sizes of spherulite are increased due to a small number of nuclei produced and delayed crystal growth, thereby degrading electrical properties of the polypropylene resin.

According to an embodiment of the present invention, the polypropylene resin includes metallic catalyst residue in an amount of 10 to 45 ppm. If the amount of the metallic catalyst residue is greater than 50 ppm, the metallic component may reduce an insulating property, lowering breakdown strength. However, the amount of the metallic catalyst residue being less than 5 ppm cannot be obtained by catalytic polymerization. In this regard, if solvent washing is separately performed for the purpose of removing catalyst residues, costs associated with solvent recovery and recycling may increase and bubbles may be undesirably generated due to evaporation of the solvent remaining when an insulating layer is formed.

The metallic catalyst residue is derived from the catalyst used in preparation of polypropylene. Therefore, the catalyst residue comprises Mg, Ti, Al and Si.

Here, a Ziegler-Natta catalyst is used. Preferably, a catalyst capable of preparing polypropylene having high tacticity may be used.

Examples of the catalyst capable of preparing polypropylene having high tacticity include a catalyst composition comprising a dialkoxy magnesium carrier, a promoter and an internal electron donor, which are used in combination.

The polypropylene polymerization catalyst used in the present invention includes a carrier consisting of dialkoxy magnesium particles obtained by metallic magnesium and alcohol, titanium tetrachloride and an internal electron donor in the presence of a halogen compound or a nitrogen halogen compound as a reaction initiator. The dialkoxy magnesium carrier is obtained by reacting metallic magnesium with alcohol in the presence of a halogen compound or a nitrogen halogen compound as a reaction initiator. Although particle shapes of the metallic magnesium particles used in preparation of the dialkoxy magnesium carrier are not severely restricted, an average particle diameter of metallic magnesium in the powdered form is preferably in the range of 10 to 300 *µ*m, more preferably 50 to 200 *µ*m. If the average particle diameter of the metallic magnesium is less than 10 *µ*m, the produced carrier may have too small an average particle size, which is not desirable. If the average particle diameter of the metallic magnesium is greater than 300 *µ*m, the carrier may have too large an average particle size, making it quite difficult to be formed into uniform spherulites, which is not desirable.

The polypropylene may be a propylene homopolymer or a random copolymer of propylene and α-olefin. In the random copolymer of propylene-α-olefin, the amount of α-olefin is used in an amount of less than 2 wt%.

A C₂-C₁₂ α-olefin is preferably used as the comonomer. A C₂-C₅ α-olefin is more preferably used as the comonomer of random copolymer.

The melting temperature (Tm) of the polypropylene may vary according to the amount of the α-olefin contained in the polypropylene copolymer. Accordingly, if the amount of the α-olefin used is greater than 2 wt%, the melting temperature (Tm) may be excessively lowered to provide poor heat resistance, thereby making the polypropylene unsuitable to be used for a high-voltage power cable operating at high temperatures.

In an embodiment of the present invention there is provided a power cable including the polypropylene resin according to the present invention in its insulating layer.

Particularly, the power cable according to the present invention may be a low voltage (LV), medium voltage (MV), high voltage (HV) or extra high voltage (EHV) power cable. Specifically, the power cable according to the present invention is preferably a low voltage (LV) or medium voltage (MV) power cable. An alternating current (AC) voltage, a direct current (DC) voltage or an over voltage (impulse) may be applied to the power cable. In an example embodiment, the power cable is an AC power cable.

According to the present invention, the low voltage (LV) refers to a voltage of 1 kV or less, the medium voltage (MV) refers to a voltage of greater than 1 kV and not greater than 40 kV, and the high voltage (HV) refers to a voltage of greater than 40 kV, preferably greater than 50 kV. The extra high voltage (EHV) preferably refers to a voltage of 230 kV or greater. Therefore, the high voltage (HV) is generally in the range greater than 40 and less than 230 kV, for example, in the range of 50 kV and less than 230 kV, while the extra high voltage (EHV) is 230 kV or greater and the upper limit of the extra high voltage (EHV) is not an important factor. Therefore, the extra high voltage (EHV) should be greater than or equal to 230 kV and may be less than or equal to 900 kV or higher than 900 kV.

The polypropylene resin according to the present invention is very advantageously used for an AC power cable, particularly, a low voltage (LV) or medium voltage (MV) AC power cable. More preferably, the power cable includes a conductor enclosed by an internal semiconducting layer, an insulating layer and an outer semiconducting layer in that order. Here, the polypropylene resin according to the present invention is included in at least one insulating layer.

According to an embodiment of the present invention, the insulating layer of the present invention may include a polypropylene resin and additional components generally known in the polymer related art, including, for example, polymeric component(s) and/or additive(s), preferably including additive(s), such as arbitrary antioxidant(s), scorch retardant(s), crosslinkage booster(s), stabilizer(s), processing adjuvant(s), flame retardant additive(s), water tree retardant additive(s), acid or ion scavenger(s), inorganic filler(s) and voltage stabilizer(s). In addition, the insulating layer of the present invention preferably includes additive(s) generally used for a wire or cable incorporating product, for example, one or more antioxidant(s). The additive(s) are used in conventionally accepted amount(s), as widely known to one skilled in the related art.

The polypropylene resin according to the present invention may be included in an amount of 50 to 100 wt% based on a total weight of the polymeric components included in the insulating layer.

The insulating layer may be a layer formed by melting and mixing the polymers included in the insulating layer.

The polypropylene resin according to the present invention may be prepared using a method generally known in the related art. However, the polypropylene resin according to the present invention may be prepared by performing polymerization so as to obtain a desired melting temperature and a desired crystallization temperature by appropriately adjusting the kind of catalyst used, polymerization conditions, and the kind and amount of propylene homopolymer mixed.

The present invention will be understood in more detail with reference to examples and comparative examples and the following examples and comparative examples are provided only for illustrating the present invention, not for limiting the protection scope of the present invention. In the following examples and comparative examples, various properties were evaluated according to the following methods and standards.

### Melt Index

The melt index was measured in accordance with ASTM D 1238 at 230° C and at 2.16 kg load.

### Solvent Extracts

To quantify the tacticity, the amount of solvent extracts was measured. The polypropylene resin was completely dissolved using a xylene solvent at 135°C and cooled to room temperature. Then, undissolved components were filtered and the solvent was dried, followed by weighing the resultant product. In order to reduce the particle sizse, it is necessary to reduce a difference (Tm-Tc) between a melting temperature (Tm) and a crystallization temperature (Tc). In this regard, the tacticity may also be undesirably increased.

### Thermal Behaviors

The sample was isothermally maintained at 200 °C for 10 minutes using differential scanning calorimetry (DSC) to then remove a thermal history and the crystallization temperature (Tc) was obtained while cooling by 10°C per minute starting from 200°C to reach 30°C. Next, after isothermal maintenance at 30°C for 10 minutes, the melting temperature (Tm) was obtained from a peak melting temperature while raising the temperature again by 10°C per minute.

### Metallic Catalyst Residue

The amount of metallic substance remaining in polypropylene was measured by X-ray fluorescence (XRF).

### Spherulite Size

After thermal history was removed by maintaining the temperature at 200°C for 1 minute, the sample was cooled to 130°C at a speed of 40°C/min. Then, the crystal growth depending on the lapse of time was identified using a microscope to determine the spherulite size.

### AC Breakdown Voltages

250 µm thick sheets were fabricated from polypropylene resins prepared in Examples and Comparative Examples using an extruder for HAAKE Polylab quality control (QC) system. AC breakdown voltages were measured in accordance with ASTM D 149.

### Example 1

### Preparation of Catalyst

To a 5 L-volume ceramic reactor equipped with a stirrer, an oil heater and a reflux condenser, which was sufficiently purged with a nitrogen stream, 1.65 g of N-chlorosuccinimde, 15 g of metallic magnesium (powdered product having an average particle diameter of 100 *µ*m), and 240 ml of anhydrous ethanol were introduced and the reactor temperature was raised to 78° C to maintain the reactor in an ethanol refluxed state while operating the reactor at a stirring speed of 240 rpm. After a lapse of about 5 minutes, hydrogen was generated as the reaction began. For discharging the generated hydrogen gas, the outlet of the reactor was left open so as to maintain the reactor under the atmospheric pressure. On completion of the hydrogen generation, 15 g of metallic magnesium (powdered product having an average particle diameter of 100 *µ*m), and 240 ml of anhydrous ethanol were divided into three fractions to be introduced every 20 minutes. When the introduction of metallic magnesium and ethanol is completed, the reactor temperature and the stirring speed were maintained in the reflux state for 2 hours (aging). After the aging, the resulted product was washed 3 times at 50° C. with 2,000 ml n-hexane per washing.

The washed resultant product was dried for 24 hours under the flow of nitrogen, obtaining 270 g (yield 96%) of dialkoxy magnesium in the form of a solid white powder with good flowability.

The produced diethoxy magnesium was in the spherical particle form having an average particle size of 37 µm, a particle distribution index of 0.78 and an apparent density of 0.32 g/cc.

To a 1 L-volume glass reactor equipped with a stirrer, of which atmosphere was sufficiently substituted with nitrogen, 150 ml of toluene and 25 g of the above prepared diethoxy magnesium were added and maintained at 10° C. 25 ml of titanium tetrachloride was diluted in 50 ml of toluene to then be added to the reactor over 1 hour, and then the reactor temperature was gradually elevated to 60° C at the rate of 0.5° C per minute. The reaction mixture was maintained at 60° C for 1 hour and then stopped stirring until a solid product was precipitated. The supernatant was removed, 200 ml of fresh toluene was then added to the residues and stirred again for 15 minutes, and washed once to then be left undisturbed.

To the solid product treated with titanium tetrachloride, 150 ml of toluene was added and stirred at 250 rpm while maintaining the temperature at 30° C as well as adding 50 ml of titanium tetrachloride thereto over 1 hour at a constant speed. When the adding of titanium tetrachloride is completed, 2.5 ml of diisobutyl phthalate was added and the reactor temperature was elevated to 110° C at a constant rate (i.e. at the rate of 1° C per minute) over 80 minutes. During the temperature elevation, 2.5 ml of diisobutyl phthalate was additionally added at each time the reactor temperature reached to 40° C and 60° C, respectively. The temperature was maintained at 110° C for 1 hour and then lowered to 90° C. Stirring was stopped and the supernatant was removed. Then, the resultant mixture was further stirred using 200 ml of toluene to then be left undisturbed. 150 ml of toluene and 50 ml of titanium tetrachloride were added to the mixture, the temperature was raised to 110° C and maintained at 110° C for 1 hour.

The slurry mixture after completing the aging process was washed twice with 200 ml of toluene per each wash, and washed 5 times with 200 ml of n-hexane per each wash at 40° C., thereby obtaining a pale-yellow solid catalyst. A titanium content of the resultant catalyst dried under a nitrogen stream for 18 hours was 2.70 wt %.

### Polymerization of Polypropylene

The prepared catalyst, triethylaluminum as a promoter and dicyclopentylmethoxysilane as a cocatalyst were used. Polymerization of a propylene homopolymer or a propylene-α-olefin random copolymer was continuously performed by Mitsui's Hypol process using two bulk reactor sets and a gas phase reactor set connected in series. The operating temperatures and pressures of the first and second bulk reactors were 68 to 75°C and 25 to 35 kg/cm² and 60 to 67°C and 20 to 30 kg/cm², respectively. The operating temperature and pressure of the third gas phase reactor were 75 to 82°C and 15 to 20 kg/cm². In the case of polymerizing a propylene homopolymer, hydrogen was additionally added to each reactor in addition to propylene to control the melt index. In the case of polymerizing propylene-α- olefin random copolymer, an α-olefin to propylene ratio was adjusted to allow for copolymerization of the same amount of α-olefin in each reactor. Various physical properties of the obtained polypropylene resin are summarized in Table 1.

### Examples 2-3

Polymerization of ethylene-propylene random copolymer was carried out in substantially the same manner as in Example 1, except that 1 wt% of ethylene and 1.8 wt% of ethylene were used in polypropylene polymerization, respectively. Various physical properties of the obtained polypropylene resin are summarized in Table 1.

### Comparative Example 1

Polymerization was carried out in substantially the same manner as in Example 1, except that Lyondellbasell's ZN118 catalyst was used and cyclohexylmethyldimethoxysilane was used as a cocatalyst.

### Comparative Example 2

Polymerization was carried out in substantially the same manner as in Example 1, except that Lyondellbasell's ZN118 catalyst was used. Ethylene and propylene random copolymer were polymerized by adding ethylene until the ethylene content during polypropylene polymerization became 1 wt%.

### Comparative Example 3

Polymerization was carried out in substantially the same manner as in Example 1, except that the α-olefin content was 3 wt%.

**Table 1**

| | Example | | | Comparative Example | | |
|---|---|---|---|---|---|---|
| | 1 | 2 | 3 | 1 | 2 | 3 |
| Melt Index (g/10 min) | 2.0 | 2.2 | 2.0 | 2.0 | 2.5 | 2.0 |
| Solvent Extract (wt%) | 2.0 | 2.7 | 3.2 | 3.5 | 3.9 | 6.0 |

| Thermal Behaviors | | | | | | |
|---|---|---|---|---|---|---|
| Melting Temperature (Tm) (°C) | 164 | 158 | 152 | 161 | 158 | 142 |
| Crystallization Temperature (Tc) (°C) | 124 | 119 | 114 | 112 | 108 | 104 |
| Tm-Tc | 40 | 39 | 38 | 49 | 50 | 38 |

| Metallic Catalyst Residue (ppm) | | | | | | |
|---|---|---|---|---|---|---|
| Ti | 0.2 | 0.1 | 0.1 | 0.4 | 0.3 | 0.1 |
| Mg | 2 | 1 | 1 | 4 | 3 | 2 |
| Al | 33 | 20 | 18 | 60 | 45 | 31 |
| Si | 7 | 4 | 4 | 15 | 10 | 5 |
| Spherulite Size (µm) | 25 | 30 | 40 | 150 | 200 | N.A* |
| AC Breakdown Voltage (kV) | 32 | 35 | 36 | 22 | 24 | 30 |

In Table 1, N.A* means that isothermal crystallization does not occur at 130°C due to a low Tc and the spherulite size cannot be measured.

As confirmed from Table 1, the polypropylene according to the present invention exhibited a superb AC breakdown strength. By contrast, in Comparative Examples 1 and 2, since the amounts of metallic catalyst residues were relatively large and a difference (Tm-Tc) between the melting temperature (Tm) and the crystallization temperature (Tc) was considerable, the spherulite sizes were relatively large, so that the breakdown strength was undesirably lowered. In Comparative Example 3, the melting temperature (Tm) was 142°C, which is undesirably low.

## Claims

1. A polypropylene resin for a power cable, wherein a melting temperature (Tm) of the polypropylene resin is 150°C or higher, a difference (Tm-Tc) between the melting temperature (Tm) and a crystallization temperature (Tc) is 45°C or less and the polypropylene resin is a non-crosslinked resin, wherein the polypropylene resin comprises 10 to 45ppm of metallic catalyst residue, as measured by X-ray fluorescence (XRF), wherein the metallic catalyst residue comprises Mg, Ti, Al and Si, wherein the polypropylene is a propylene homopolymer or a random copolymer of propylene and one or more α-olefins other than propylene, wherein the amount of α-olefin is less than 2 wt%, and wherein the polypropylene is prepared by using a catalyst composition comprising a dialkoxy magnesium carrier.

2. The polypropylene resin of claim 1, wherein the melting temperature (Tm) is in the range of between 150°C and 165°C.

3. A power cable comprising the polypropylene resin of claim 1 or 2 in an insulating layer of the power cable.

## Patentansprüche

1. Polypropylenharz für ein Stromkabel, wobei eine Schmelztemperatur (Tm) des Polypropylenharzes 150°C oder mehr beträgt, eine Differenz (Tm-Tc) zwischen der Schmelztemperatur (Tm) und einer Kristallisationstemperatur (Tc) 45°C oder weniger beträgt und das Polypropylenharz ein unvernetztes Harz ist, wobei das Polypropylenharz 10 bis 45 ppm Metallkatalysatorrückstand, gemessen durch Röntgenfluoreszenz (XRF, X-ray fluorescence), umfasst, wobei der Metallkatalysatorrückstand Mg, Ti, Al und Si umfasst, wobei es sich bei dem Polypropylen um ein Propylen-Homopolymer oder ein statistisches Copolymer von Propylen und ein oder mehrere andere α-Olefine als Propylen handelt, wobei die Menge an α-Olefin weniger als 2 Gew.-% beträgt und wobei das Polypropylen unter Verwendung einer Katalysatorzusammensetzung, die einen Dialkoxymagnesium-Träger umfasst, hergestellt wird.

2. Polypropylenharz nach Anspruch 1, wobei die Schmelztemperatur (Tm) im Bereich zwischen 150°C und 165°C liegt.

3. Stromkabel, umfassend das Polypropylenharz nach Anspruch 1 oder 2 in einer Isolierschicht des Stromkabels.

## Revendications

1. Résine de polypropylène pour un câble électrique, dans laquelle une température de fusion (Tm) de la résine de polypropylène est de 150°C ou plus, une différence (Tm-Tc) entre la température de fusion (Tm) et une température de cristallisation (Tc) est de 45°C ou moins et la résine de polypropylène est une résine non réticulée, dans laquelle la résine de polypropylène comprend de 10 à 45 ppm de résidu de catalyseur métallique, comme mesuré par fluorescence à rayons X (XRF), dans laquelle le résidu de catalyseur métallique comprend Mg, Ti, Al et Si, dans laquelle le polypropylène est un homopolymère de propylène ou un copolymère aléatoire de propylène et d'une ou plusieurs α-oléfines autres que le propylène, dans laquelle la quantité d'α-oléfme est inférieure à 2 % en poids, et dans laquelle le polypropylène est préparé en utilisant une composition de catalyseur comprenant un support de dialcoxy magnésium.

2. Résine de polypropylène selon la revendication 1, dans laquelle la température de fusion (Tm) est dans la plage allant de 150°C à 165°C.

3. Câble électrique comprenant la résine de polypropylène selon la revendication 1 ou 2 dans une couche isolante du câble électrique.
